# EUROPÄISCHE PATENTANMELDUNG

(11) **EP 3 709 387 A1**
(43) Veröffentlichungstag der Anmeldung: **16.09.2020**
(21) Anmeldenummer: 19162047.5
(22) Anmeldetag: 11.03.2019
(51) Int. Cl.: H01M 2/10, B60K 1/04, B62D 21/15

(54) **BATTERIEKASTEN FÜR EINE TRAKTIONSBATTERIE**

(71) Anmelder: voestalpine Metal Forming GmbH, 3500 Krems an der Donau (AT)
(72) Erfinder: Wiemann, Marcus, 49324 Melle (DE); Canalini Claudio, 73312 Geislingen (DE)
(74) Vertreter: Jell, Friedrich

(57) **Zusammenfassung**

Es wird ein Batteriekasten (1) für eine Traktionsbatterie mit einem Gehäuseunterteil (2), das Gehäuseseitenwände (2.1, 2.2, 2.3, 2.4) und einen Gehäuseboden (2.5) aufweist, mit einem Gehäusedeckel (3) und mit einem, eine geschlossene Hohlprofilform aufweisenden Crashrahmen (5) entlang den Gehäuseseitenwänden (2.1, 2.2, 2.3, 2.4) gezeigt. Um ein geringes Gewicht und ausgezeichnetes Crashverhalten zu ermöglichen, wird vorgeschlagen, dass der Crashrahmen (5) im Gehäuseunterteil (2) vorgesehen ist und Crashprofile (5.1, 5.2, 5.3, 5.4) aufweist, wobei die Gehäuseseitenwände (2.1, 2.2, 2.3, 2.4) und die Crashprofile (5.1, 5.2, 5.3, 5.4) jeweils einen Profilabschnitt (50) an der geschlossenen Hohlprofilform des Crashrahmens (5) ausbilden.

## Beschreibung

Die Erfindung betrifft einen Batteriekasten für eine Traktionsbatterie mit einem Gehäuseunterteil, das Gehäuseseitenwände und einen Gehäuseboden aufweist, mit einem Gehäusedeckel und mit einem, eine geschlossene Hohlprofilform aufweisenden Crashrahmen entlang den Gehäuseseitenwänden.

Batteriekasten zur Einhausung und zum Schutz elektrisch zusammengeschalteten Batteriemodulen einer Traktionsbatterie eines Kraftfahrzeugs sind aus dem Stand der Technik bekannt (EP2501576B1). Derartige Batteriekasten weisen ein, aus einem Blech tiefgezogenen Gehäuseunterteil, einen Gehäusedeckel und einen an den Gehäuseunterteil außen anschließenden Crashrahmen auf. Befestigt sind die Batteriemodule an einer in dem Gehäuseunterteil vorgesehenen Tragstruktur.
Jedoch sind derartige Batteriekasten unter anderem vergleichsweise aufwendig herzustellen - zudem weisen sie aufgrund des zusätzlichen Crashrahmens ein vergleichsweise hohes Gewicht auf. Des Weiteren beeinflusst der an die Gehäuseseitenwand anschließende Crashrahmen das Verformungsverhalten des Gehäuseunterteils im Falle eines Crashs - was die Gefahr einer Beschädigung des Batteriemoduls weiter erhöhen kann.

Die Erfindung hat sich daher die Aufgabe gestellt, einen Batteriekasten der eingangs geschilderten Art derart konstruktiv zu verändern, dass sich dieser durch geringes Gewicht auszeichnet - dennoch aber auch ein ausgezeichnetes Crashverhalten aufweist. Zudem soll der Batteriekasten einfach und kostengünstig herzustellen sein.

Die Erfindung löst die gestellte Aufgabe durch die Merkmale des Anspruchs 1.

Ist der Crashrahmen in der Gehäuseunterteil vorgesehen, kann zunächst sichergestellt werden, dass im Falle eines Crashs ein Batteriemodul im Gehäuseunterteil besonders gut geschützt sind. Dies wird jedoch nicht nur unter der Bedingung eines erhöhten Gewichts erreicht, da erfindungsgemäß der Crashrahmen Crashprofile aufweist und die Gehäuseseitenwände sowie die Crashprofile jeweils einen Profilabschnitt an der Hohlprofilform des Crashrahmens ausbilden. Durch das Merkmal des Gehäuseunterteils als Teilabschnitt an der geschlossenen Hohlprofilform des Crashrahmens ist nicht nur eine Materialreduktion am Batteriekasten erreichbar - vielmehr kann damit auch das Crashverhalten des Batteriekastens bzw. dessen Gehäuseunterteil reproduzierbar eingestellt werden. Eine unerwünschte Beeinträchtigung des Crashverhaltens durch unterschiedliches Verhalten von Gehäuseunterteil und Crashrahmen - wie dies im Stand der Technik der Fall ist - kann sohin vermieden werden, womit die Sicherheit der vom Batteriekasten aufgenommenen Batteriemodule erhöht wird.

Der Crashrahmen kann ein vorteilhaftes Crashverhalten ermöglichen, wenn dieser einen Steg sowie einen ersten und einen zweiten Flansch aufweist, welche an der Gehäuseunterteil befestigen Flansche an jeweils einem gegenläufig, insbesondere in einander entgegengesetzten Richtungen, abstehen.

Vorzugsweise weist das Gehäuseunterteil einen an die Gehäuseseitenwände anschließenden, umlaufenden Gehäuseflansch auf, auf welchem der erste Flansch aufliegt. Dies erhöht nicht nur die Verwindungssteifigkeit des Flansches, sondern stellt auch eine geschlossene Hohlprofilform sicher.

Liegt der zweite Flansch auf dem Gehäuseboden auf, kann dieser die mechanische Versteifung des Gehäusebodens unterstützen - und damit die Verwindungssteifigkeit des Batteriekastens erhöhen bzw. dessen Crashverhalten weiter verbessern.

Läuft der Steg dem Gehäuseboden in normalem Winkel zu, kann der Batteriekasten bereits für die Aufnahme eines Batteriemoduls vorbereitet sein - bzw. sind hierfür weitere konstruktive Maßnahmen zur Anpassung von Abmessungen vermeidbar.

Vorzugsweise ist das Crashprofil im Querschnitt z-förmig ausgebildet, um mit einer konstruktiven Vereinfachung eine besonders standfeste Hohlprofilform ausbilden zu können.

Bildet die gesamten Gehäuseseitenwand einen Profilabschnitt an der Hohlprofilform aus, kann ein geschlossenes Hohlprofil mit einem hohen Flächenträgheitsmoment geschaffen werden. Das Crashverhalten des Batteriekastens ist dadurch weiter verbesserbar.

Die Torsionssteifigkeit des Crashrahmens kann weiter erhöht werden, wenn die Gehäuseseitenwände Biegeabschnitte aufweisen, welche Biegeabschnitte Profilabschnitte an der Hohlprofilform des Crashrahmens ausbilden.

Die Konstruktion ist weiter zu vereinfachen, wenn das aus einem Blech, insbesondere Stahlblech, umgeformte, insbesondere tiefgezogene oder gefaltete, Gehäuseunterteil eine Wannenform aufweist. Zudem kann dies die Herstellung des Gehäuseunterteils besonders vereinfachen bzw. deren Standfestigkeit weiter erhöhen.

Weist der Batteriekasten eine in dem Gehäuseunterteil vorgesehene Tragstruktur mit Quer- und/oder Längsträgern zur Halterung eines Batteriemoduls auf, wobei die Tragstruktur an den Crashrahmen anschließt, kann nicht nur eine belastbare Befestigungsmöglichkeit für die Batteriemodule in dem Gehäuseunterteil zur Verfügung stehen, sondern auch das Crashverhalten des Crashrahmens durch die Tragstruktur zusätzlich verbessert werden. Die Standfestigkeit des Batteriekastens kann sich damit weiter verbessern.

Ist der Gehäusedeckel mit dem Gehäuseunterteil, insbesondere mit dem Gehäuseflansch des Gehäuseunterteils, lösbar verbunden, kann eine einfache und auch gegenüber Witterungseinflüssen standfeste Kapselung des Batteriemoduls durch den Batteriekasten erreicht werden. Mit einer besonders hohen Standfestigkeit des Batteriemoduls ist somit zu rechnen.

Die Konstruktion des Batteriekastens kann weiter vereinfacht werden, wenn das Gehäuseunterteil mit den Crashprofilen stoffschlüssig, insbesondere über eine diskontinuierliche Schweißverbindung, verbunden ist.

Hierzu sind bevorzugt die Flansche der Crashprofile über eine Punktschweißnaht und/oder der Steg der Crashprofile über eine abgesetzte Kehlnaht mit Gehäuseunterteil verbunden, um eine vergleichsweise hohe mechanische Stabilität und Crashperformance zu ermöglichen.

Vorzugsweise ist der Crashrahmen geschlossen ausgebildet, um das Deformationsverhalten von Crashprofilen und Batteriekastens weiter zu verbessern. Mit einem weiter erhöhten Schutz der aufgenommenen Batteriemodule kann sohin gerechnet werden.

Insbesondere kann sich der erfindungsgemäße Batteriekasten für eine Traktionsbatterie eignen.

Insbesondere kann sich der erfindungsgemäße Batteriekasten bei einem Fahrzeug auszeichnen, wenn der Batteriekasten, insbesondere die Traktionsbatterie, unterhalb des Karosseriebodens angeordnet ist.

In den Figuren ist beispielsweise der Erfindungsgegenstand anhand einer Ausführungsvariante näher dargestellt. Es zeigen
- Fig. 1: eine aufgerissene Seitenansicht auf einen Batteriekasten,
- Fig. 1a: eine Detailansicht zu Fig. 1 und
- Fig. 2: eine Draufsicht auf den Batteriekasten mit abgenommenem Gehäusedeckel.

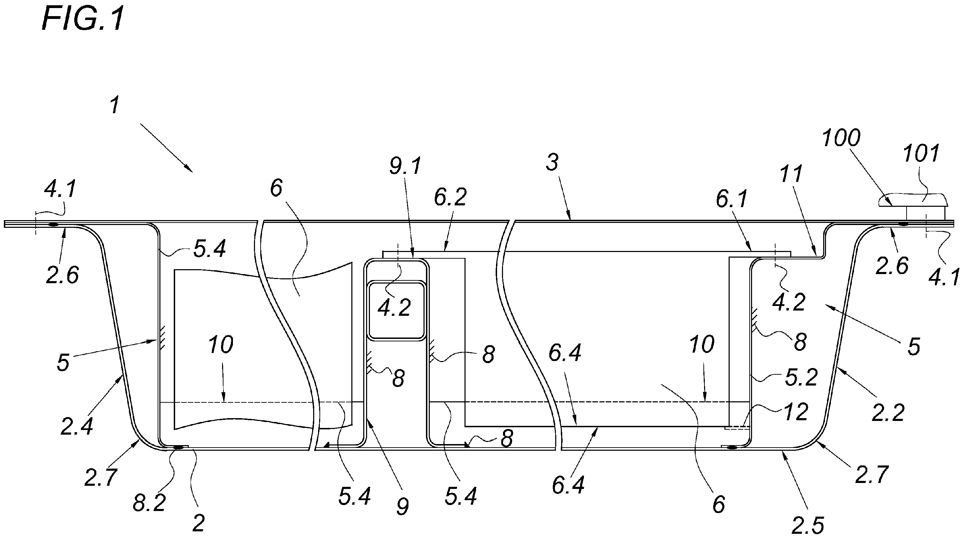

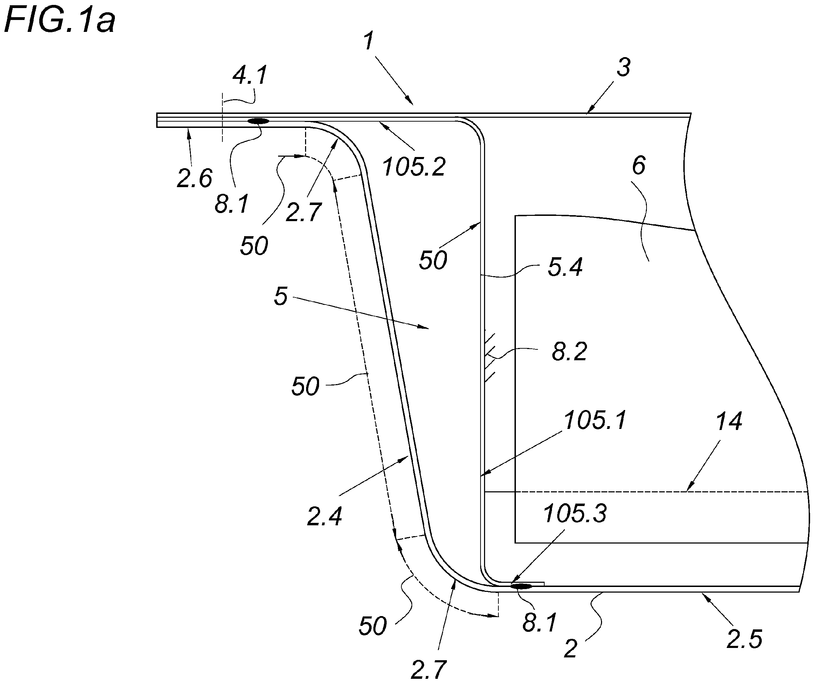

Nach Fig. 1 wird beispielsweise von einer Traktionsbatterie ein Batteriekasten 1 mit einem Gehäuseunterteil 2 und mit einem den Batteriekasten 1 verschließenden Gehäusedeckel 3 dargestellt. Dieser Gehäusedeckel 3 ist mit dem Gehäuseunterteil 2, nämlich mit deren Gehäuseflansch 2.6, über angedeutet dargestellte erste Schraubverbindungen 4.1 lösbar verbunden.

Das aus einem Blech umgeformte Gehäuseunterteil 2 weist Gehäuseseitenwände 2.1, 2.2, 2.3, 2.4 und einen an die Gehäuseseitenwände 2.1, 2.2, 2.3, 2.4 anschließenden Gehäuseboden 2.5 auf. Als Material für das Gehäuseunterteil 2 eignet sich besonders, aber natürlich nicht ausschließlich, ein Blech, nämlich Stahlblech. Es ist vorstellbar, das Blech durch Tiefziehen umzuformen, um dem Gehäuseunterteil 2 eine Wannenform zu geben. Ebenso ist vorstellbar, hiefür das Blech durch Falten umzuformen, um dem Gehäuseunterteil 2 ein Wannenform zu geben.

Der Batteriekasten 1 verfügt zudem über einen Crashrahmen 5 entlang den Gehäuseseitenwänden 2.1, 2.2, 2.3, 2.4, welcher Crashrahmen 5 die Batteriemodule 6 bzw. die Batteriepacks der Traktionsbatterie vor mechanische Beschädigung im Falle eines Crashs schützt. Der Crashrahmen 5 weist im Querschnitt eine geschlossene Hohlprofilform auf - was ihm eine hohe Steifigkeit verleiht.

Die Batteriemodule 6 weisen vorzugsweise Lithium-Ionen-Zellen auf. Bekanntermaßen wird unter einem Batteriemodul 6 ein zusammengeschaltetes Paket von mehreren Batteriezellen verstanden, welche Batteriezellen vorzugsweise von einem Gehäuse umgeben sind.

Erfindungsgemäß wird die Konstruktion des Batteriekastens 1 erheblich gegenüber anderen aus dem Stand der Technik bekannten Batteriekasten 1 verbessert, indem der Crashrahmen 5 in dem Gehäuseunterteil 2 vorgesehen ist.

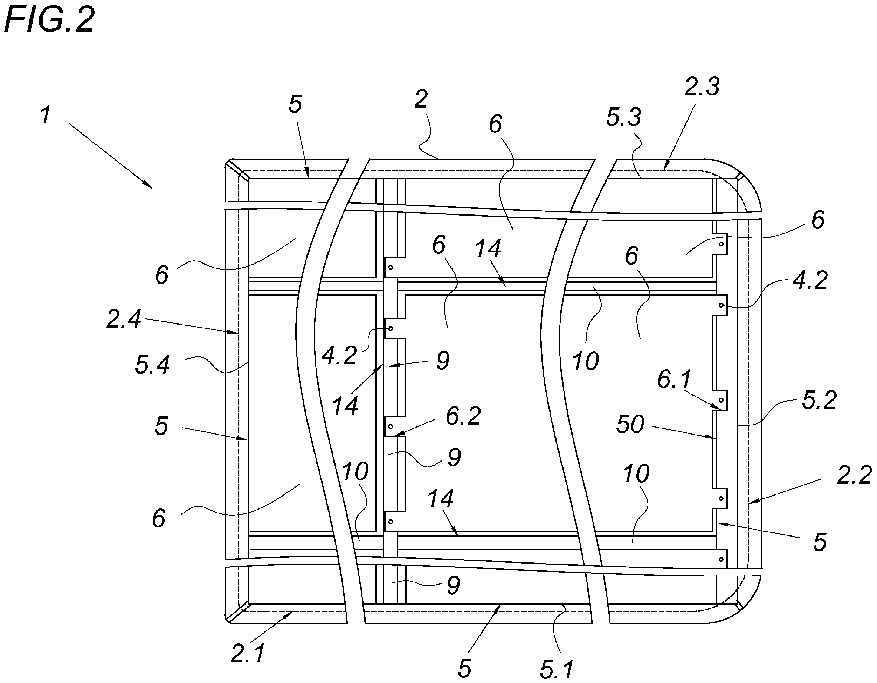

Dies ist zudem gewichtssparend, weil die, im Ausführungsbeispiel vier, Crashprofile 5.1, 5.2, 5.3, 5.4 des Crashrahmens 5 und die Gehäuseseitenwände 2.1, 2.2, 2.3, 2.4 jeweils einen Profilabschnitt 50 an der Hohlprofilform des Crashrahmens 5 ausbilden - wie im Detail nach Fig. 2 erkennbar. Dadurch ergibt sich auch eine erheblich vereinfachte Konstruktion im Bereich des Crashrahmens 5. Des Weiteren führt der Verbund von Gehäuseunterteil 2 und Crashprofile 5.1, 5.2, 5.3, 5.4 zu einer hohen Verwindungssteifigkeit und Beulsteife - womit die Batteriemodule 6 auch bei hohen mechanischen Belastungen geschützt gelagert sind. Dies insbesondere, wenn die gesamte Gehäuseseitenwand 2.1 einen Profilabschnitt 50 an der geschlossenen Hohlprofilform ausbildet. Diese Hohlprofilform ist einkammerig dargestellt - es ist aber auch eine Hohlprofilform mit mehreren Kammern vorstellbar, was nicht dargestellt worden ist.

Zudem kann nach Fig. 1a erkannt werden, dass die Gehäuseseitenwände 2.1, 2.2, 2.3, 2.4 Biegeabschnitte 2.7 aufweisen. Diese Biegeabschnitte 2.7 bilden Profilabschnitte 50 an der Hohlprofilform des Crashrahmens 5 aus - was die Torsionssteifigkeit des Crashrahmens 5 weiter verbessert. Die Hohlprofilform des Crashrahmens 5 wird daher von den Gehäuseseitenwänden 2.1, 2.2, 2.3, 2.4 und den Crashprofilen 5.1, 5.2, 5.3, 5.4 gebildet.

Wie in Fig. 1 in Verbindung mit Fig 1a weiter zu erkennen, weist das Crashprofil 5.3 - als Beispiel für die anderen Crashprofile 5.1, 5.2, 5.4 - einen Steg 105.1 sowie einen ersten Flansch 105.2 und zweiten Flansch 105.3 auf. Die Flansche 105.2 und 105.3 stehen an jeweils von einem Stegende des Stegs 105.1 gegenläufig, im Ausführungsbeispiel in einander entgegengesetzten Richtungen weg ab und sind jeweils mit dem Gehäuseunterteil 2 verbunden.

Der ersten Flansch 105.2 liegt auf einem Gehäuseflansch 2.6 auf, welcher Gehäuseflansch 2.6 an die Gehäuseseitenwand 2.1 anschließt und umläuft - der zweite Flansch 105.3 liegt auf dem Gehäuseboden 2.5 auf. Der Steg 105.1 läuft dem Gehäuseboden 2.5 im normalen Winkel zu, was zu einem z-förmigen Verlauf des Crashprofils 5.3 führt.

Gehäuseunterteil 2 und Crashprofile 5.1, 5.2, 5.3, 5.4 sind über eine stoffschlüssige Verbindung verbunden, und zwar über diskontinuierliche Schweißverbindung 8.1, 8.2, nämlich über mehrere Schweißpunkte 8.1 and den Flanschen 105.2 und 105.3 und einer abgesetzten Kehlnaht 8.2 an den Stegen 105.1. Anderer Schweißnähte 8 sind vorstellbar.

Der Crashrahmen 5 ist geschlossen ausgeführt, in dem sich die Crashprofile 5.1, 5.2, 5.3, 5.4 an deren Enden mit dem jeweilig angrenzenden Crashprofil 5.1, 5.2, 5.3 bzw 5.4 miteinander verbunden, insbesondere verschweißt sind. Dies verbessert das Deformationsverhalten des Crashrahmens 5 schützt die aufgenommenen Batteriemodule 6 verbessert.

Innerhalb des Gehäuseunterteils 2 sind Quer- und Längsträger 9, 10 vorgesehen, welche eine Tragstruktur 14 im Gehäuseunterteil zur Befestigung und Halterung der Batteriemodule 6 ausbilden. Zudem schließt diese Tragstruktur 14 an den Crashrahmen 5 an. Hierzu sind die Querträger 9 und die Längsträger 10 jeweils mit Crashprofilen 5.1, 5.3 bzw. 5.2, 5.4 unlösbar verbunden.

Die Querträger 9 verlaufen von einem Crashprofil 5.2 zum anderen Crashprofil 5.4 durchgehend und sind an diese befestigt - vorzugsweise unlösbar mit diesen verbunden. Somit bilden Querträger 9, Längsträger 10 und Crashprofile 5.1, 5.2, 5.3, 5.4 eine besonders belastbare Trägerstruktur 14 in dem Gehäuseunterteil 2 aus. Dies kann unter anderem für eine hohe Verwindungssteifigkeit zum Schutz der Batteriemodule 6 sorgen. Die Längsträger 10 befinden sich je zwischen den zwei Querträgern 9 bzw. zwischen Querträger 9 und Crashprofilen 5.1, 5.2, 5.3, 5.4, wie dies nach Fig. 2 entnommen werden kann.

Nach Fig. 1 und 2 ist erkennbar, dass ein Batteriemodul 6 bzw. Batteriepack jeweils an einem Crashprofil 5.2 und an der Tragstruktur 14 lösbar befestigt sind. Die Batteriemodule 6 sind Teile einer Batterie. Die lösbare Verbindung des Batteriemoduls 6 mit dem Crashprofilen 5.1, 5.2, 5.3 erfolgt beispielsweise über, dem Batteriemodul 6 seitlich abstehende Flansche 6.1, 6.2, welche auf den jeweiligen Crashprofilen 5.1, 5.2 aufliegen und von zweiten Schraubverbindungen 4.2 an den Crashprofilen 5.1, 5.2 gehalten werden. Im Allgemeinen wird erwähnt, dass alternativ zur ersten und zweiten Schraubverbindungen 4.1, 4.2 auch andere lösbare Verbindungen vorstellbar sind. Zudem können die Batteriemodule 6 auch am Gehäuseboden etc. lösbar verbunden sein, was nicht näher dargestellt ist.

Wie zudem der Fig. 1 entnehmbar, ist der Batteriekasten 1 andeutungsweise an einem Kraftfahrzeug 100 montiert - und zwar unterhalb des Karosseriebodens 101.

## Patentansprüche

1. Batteriekasten für eine Traktionsbatterie mit einem Gehäuseunterteil (2), das Gehäuseseitenwände (2.1, 2.2, 2.3, 2.4) und einen Gehäuseboden (2.5) aufweist, mit einem Gehäusedeckel (3) und mit einem, eine geschlossene Hohlprofilform aufweisenden Crashrahmen (5) entlang den Gehäuseseitenwänden (2.1, 2.2, 2.3, 2.4), **dadurch gekennzeichnet, dass** der Crashrahmen (5) im Gehäuseunterteil (2) vorgesehen ist und Crashprofile (5.1, 5.2, 5.3, 5.4) aufweist, wobei die Gehäuseseitenwände (2.1, 2.2, 2.3, 2.4) und die Crashprofile (5.1, 5.2, 5.3, 5.4) jeweils einen Profilabschnitt (50) an der geschlossenen Hohlprofilform des Crashrahmens (5) ausbilden.

2. Batteriekasten nach Anspruch 1, **dadurch gekennzeichnet, dass** das Crashprofil (5.1, 5.2, 5.3, 5.4) einen Steg (105.1) sowie einen ersten und einen zweiten Flansch (105.2, 105.3) aufweist, welche an dem Gehäuseunterteil (2) befestigen Flansche (105.2, 105.3) an jeweils einem Stegende gegenläufig, insbesondere in einander entgegengesetzten Richtungen, abstehen.

3. Batteriekasten nach Anspruch 2, **dadurch gekennzeichnet, dass** das Gehäuseunterteil (2) einen an die Gehäuseseitenwände (2.1, 2.2, 2.3, 2.4) anschließenden, umlaufenden Gehäuseflansch (2.6) aufweist, auf welchem der erste Flansch (105.2) aufliegt.

4. Batteriekasten nach Anspruch 2 oder 3, **dadurch gekennzeichnet, dass** der zweite Flansch (105.3) auf dem Gehäuseboden (2.5) aufliegt.

5. Batteriekasten nach Anspruch 2, 3 oder 4, **dadurch gekennzeichnet, dass** der Steg (105.1) dem Gehäuseboden (2.5) in normalem Winkel zuläuft.

6. Batteriekasten nach einem der Ansprüche 2 bis 5, **dadurch gekennzeichnet, dass** das Crashprofil (5.1, 5.2, 5.3, 5.4) im Querschnitt z-förmig ausgebildet ist.

7. Batteriekasten nach einem der Ansprüche 1 bis 6, **dadurch gekennzeichnet, dass** die gesamte Gehäuseseitenwand (2.1, 2.2, 2.3, 2.4) einen Profilabschnitt an der Hohlprofilform ausbildet.

8. Batteriekasten nach einem der Ansprüche 1 bis 7, **dadurch gekennzeichnet, dass** die Gehäuseseitenwände (2.1, 2.2, 2.3, 2.4) Biegeabschnitte (2.7) aufweisen, welche Biegeabschnitte (2.7) Profilabschnitte (50) an der Hohlprofilform des Crashrahmens (5) ausbilden.

9. Batteriekasten nach einem der Ansprüche 1 bis 8, **dadurch gekennzeichnet, dass** das aus einem Blech, insbesondere Stahlblech, umgeformte, insbesondere tiefgezogene oder gefaltete, Gehäuseunterteil (2) eine Wannenform aufweist.

10. Batteriekasten nach einem der Ansprüche 1 bis 9, **dadurch gekennzeichnet, dass** der Batteriekasten (1) eine in dem Gehäuseunterteil (2) vorgesehene Tragstruktur (14) mit Quer- und/oder Längsträgern (9, 10) zur Halterung von Batteriemodulen (6) aufweist, wobei die Tragstruktur (14) an den Crashrahmen (5) anschließt.

11. Batteriekasten nach einem der Ansprüche 1 bis 10, **dadurch gekennzeichnet, dass** der Gehäusedeckel (3) mit dem Gehäuseunterteil (2), insbesondere mit dem Gehäuseflansch (2.6) des Gehäuseunterteils (2), lösbar verbunden ist.

12. Batteriekasten nach einem der Ansprüche 1 bis 11, **dadurch gekennzeichnet, dass** das Gehäuseunterteil (2) mit den Crashprofilen (5.1, 5.2, 5.3, 5.4) stoffschlüssig, insbesondere über eine diskontinuierliche Schweißverbindung (8.1, 8.2), verbunden ist.

13. Batteriekasten nach Anspruch 12, **dadurch gekennzeichnet, dass** die Flansche (105.2, 105.2) der Crashprofile (5.1, 5.2, 5.3, 5.4) über eine Punktschweißnaht (8.1) und/oder der Steg (105.1) der Crashprofile (5.1, 5.2, 5.3, 5.4) über eine abgesetzte Kehlnaht (8.2) mit Gehäuseunterteil (2) verbunden sind.

14. Batteriekasten nach einem der Ansprüche 1 bis 13, **dadurch gekennzeichnet, dass** der Crashrahmen (5) geschlossen ausgebildet ist.

15. Traktionsbatterie mit einem Batteriekasten (1) nach einem der Ansprüche 1 bis 14.

16. Fahrzeug mit einem Karosserieboden (101) und mit einem Batteriekasten (1) nach einem der Ansprüche 1 bis 14, **dadurch gekennzeichnet, dass** der Batteriekasten (1) unterhalb des Karosseriebodens (101) angeordnet ist.
